# EUROPÄISCHE PATENTSCHRIFT

(11) **EP 0 407 352 B1**
(45) Veröffentlichungstag und Bekanntmachung des Hinweises auf die Patenterteilung: **25.08.1993**
(21) Anmeldenummer: 90810505.9
(22) Anmeldetag: 05.07.1990
(51) Int. Cl.: E03C 1/01

(54) **Vorrichtung zur Befestigung eines Montagerahmens für Sanitärapparate**
Device for mounting a frame for a sanitary apparatus
Dispositif pour le raccordement d'un cadre pour un appareil sanitaire

(30) Priorität: 07.07.1989 CH 2550/89
(43) Veröffentlichungstag der Anmeldung: 09.01.1991
(73) Patentinhaber: Geberit AG, CH-8645 Jona (CH)
(72) Erfinder: Lechner, Peter, CH-8645 Jona (CH)
(74) Vertreter: Groner, Manfred

(56) Entgegenhaltungen:
- EP-A- 0 120 788
- EP-A- 0 201 768
- DE-A- 2 333 132
- DE-A- 3 528 334

## Beschreibung

Die Erfindung betrifft eine Vorrichtung nach dem Oberbegriff des unabhängigen Patentanspruchs 1.

Eine Vorrichtung dieser Art ist durch die EP-A-0 201 768 bekannt geworden. Als Verbindungsteil ist hier ein Montagebügel mit zwei Armen vorgesehen, der mit Feststellschrauben am Montagerahmen fixiert wird. Für eine exakte Ausrichtung des Sanitärapparates müssen in der Regel mehrmals Schrauben gelöst und wieder befestigt werden, was zeitaufwendig ist.

Ferner ist durch die DE-A-35 28 334, Fig. 2, Position 20, eine Vorrichtung bekannt geworden, die eine Blechplatte aufweist, die in eine an einer Gebäudewand befestigten Schiene eingeschoben und fixiert wird. Die an der Schiene fixierte Blechplatte wird zur Befestigung des Montagerahmens an diesem angeschraubt. In den Rahmen kann beispielsweise ein UP-Spülkasten eingesetzt werden. Der Montagerahmen eignet sich insbesondere für nachherige Ausmauerungen oder Vormauerung. An zwei am Rahmen befestigte Gewindestangen kann beispielsweise ein Waschtisch oder ein Urinoir befestigt werden.

Der Erfindung kann somit die Aufgabe zugrunde gelegt werden, eine Vorrichtung der genannten Art zu schaffen, die eine schnellere und einfachere und dennoch stabile Befestigung eines Montagerahmens an einer Gebäudewand ermöglicht und die weitgehend aus Kunststoff herstellbar ist. Die Aufgabe ist durch die Erfindung gemäss Aspruch 1 gelöst.

Bei der erfindungsgemässen Vorrichtung gemäss Anspruch 1 sind Blechstücke mit Langlöchern und Schraubverbindungen vermieden.

Ausführungsbeispiele der Erfindung werden nachfolgend anhand der Zeichnungen näher erläutert. Es zeigen:
- Fig. 1: eine perspektivische Ansicht eines Montagerahmens mit zwei Varianten der erfindungsgemässen Vorrichtung,
- Fig. 2: in perspektivischer Darstellung eine erfindungsgemässe Vorrichtung vor der Zusammensetzung seiner Teile,
- Fig. 3: eine Vorrichtung gemäss Fig. 2 nach dem Zusammensetzen der Teile,
- Fig. 4: in perspektivischer Darstellung ein Teil einer erfindungsgemässen Vorrichtung,
- Fig. 5: in perspektivischer Darstellung ein weiterer Teil einer erfindungsgemässen Vorrichtung,
- Fig. 6: einen Schnitt durch eine an einer Gebäudewand befestigte Schiene mit einer daran fixierten erfindungsgemässen Vorrichtung, wobei hier Teile weggelassen sind,
- Fig. 7: entsprechend Fig. 6, jedoch im verriegelten Zustand,
- Fig. 8: in perspektivischer Darstellung ein Teil einer erfindungsgemässen Vorrichtung nach einer Variante,
- Fig. 9: eine weitere Ansicht des Teils gemäss Fig. 8,
- Fig. 10: eine Ansicht eines Halters,
- Fig. 11: einen Schnitt durch den Halter entlang der Linie XI-XI der Fig. 10, und
- Fig. 12: einen Schnitt durch den Halter entlang der Linie XII-XII der Fig. 10.

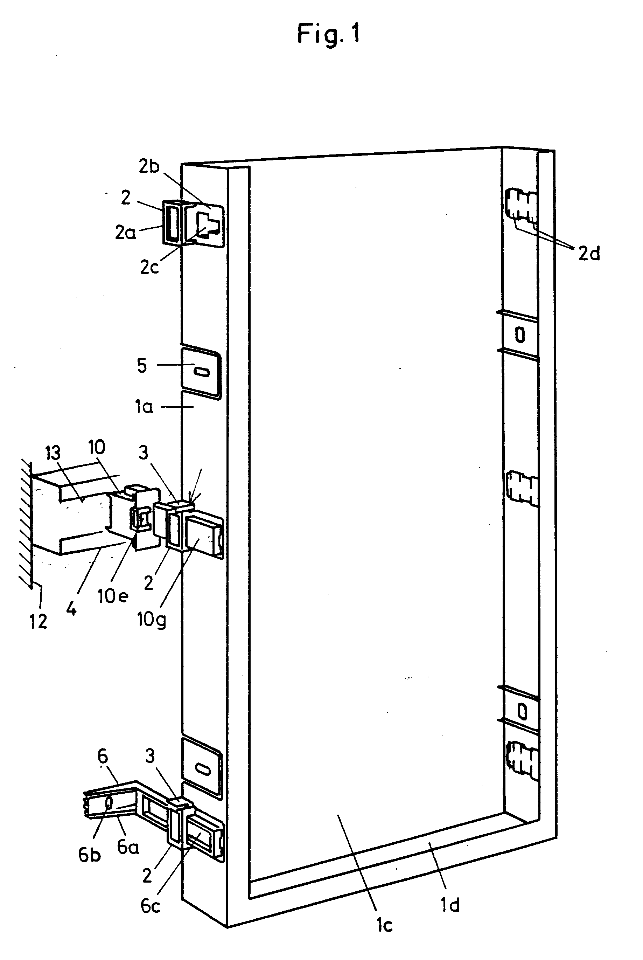

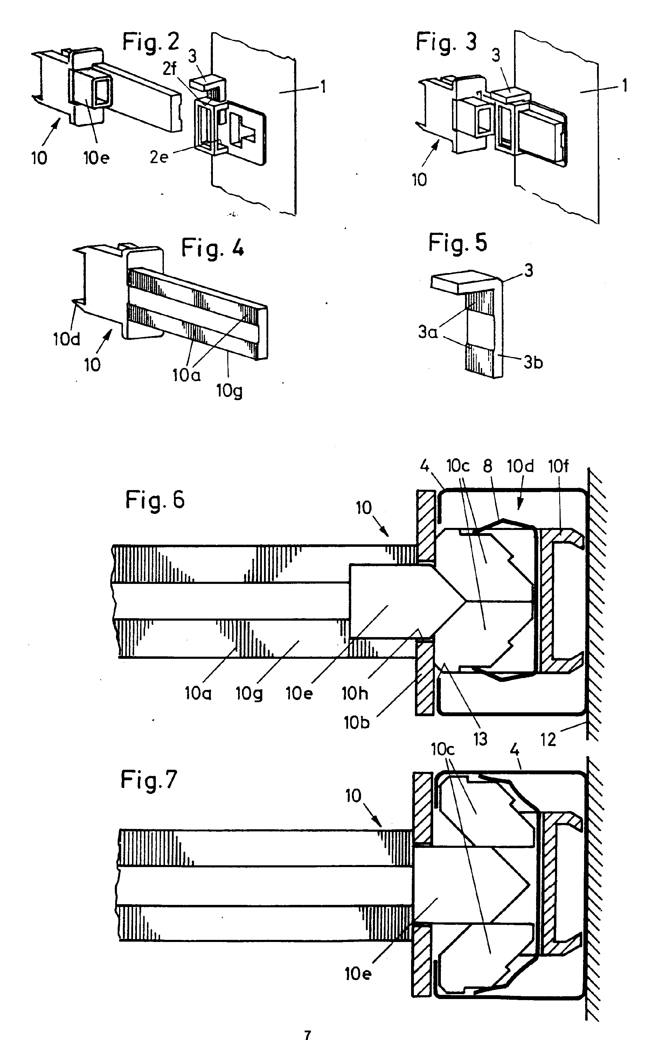

Die Fig. 1 zeigt einen Montagerahmen 1 mit zwei parallelen Seitenwandungen 1a, einer Rückwand 1c sowie einem Boden 1d. An dem beispielsweise aus verzinktem Blech hergestellten Rahmen werden in bekannter Weise Sanitärapparate, Armaturen Rohrteile und Leitungen angebracht. Wird der Montagerahmen 1 im Abstand zu einer Gebäudewand 12 an einer Montageschiene 4 befestigt, so werden Halter 2 und Verbindungsteile 10 verwendet. Soll hingegen die Montagevorrichtung 1 ohne Montageschienen 4 direkt an der Gebäudewand 12 befestigt werden, so eignen sich Halter 2 und Verbindungsteile 6. Kann der Montagerahmen 1 ohne Abstand zur Gebäudewand 12 an dieser befestigt werden, so werden ausgestanzte Laschen 5 um 90° nach aussen gebogen und mit geeigneten Fixierungsmitteln an der Wand befestigt.

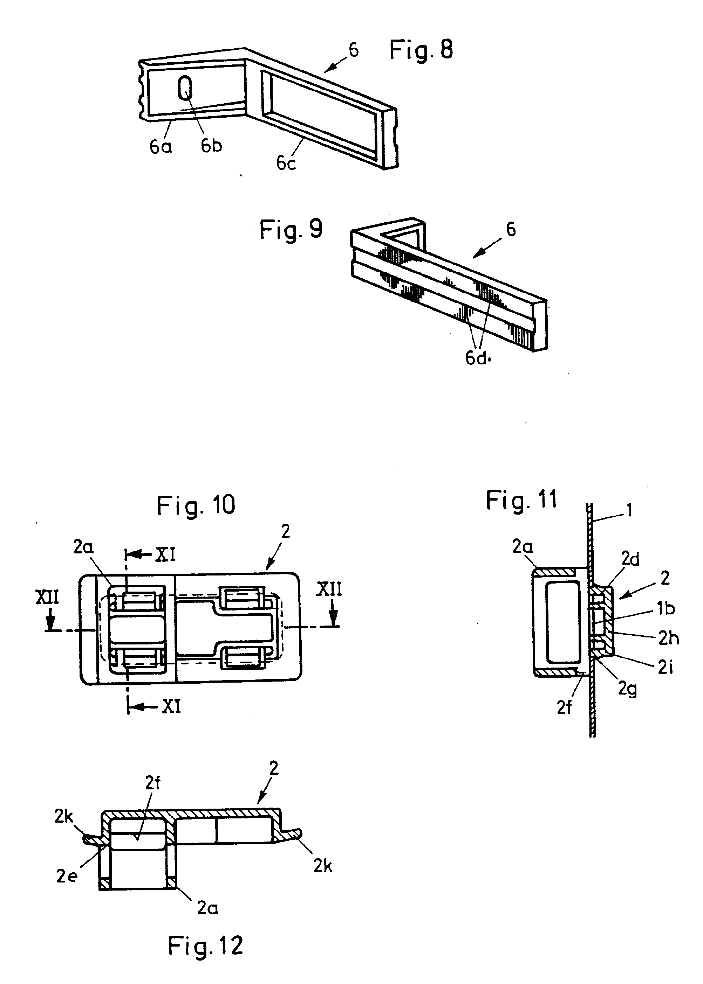

Die Halter 2 sind aus einem geeigneten Kunststoff hergestellt und werden wie aus Fig. 11 ersichtlich jeweils an einer Oeffnung 1b einer Seitenwandung 1a befestigt. Die Halter 2 besitzen jeweils an federnden Flanken 2i eines Ansatzes 2h Rastnocken 2g, welche die Oeffnung 1b hintergreifen. Um einen Halter 2 am Montagerahmen 1 zu befestigen, muss somit lediglich der Ansatz 2h in die Oeffnung 1b eingesetzt werden, worauf die Rastnocken 2g selbsttätig einrasten und den Halter 2 unverschiebbar am Montagerahmen fixieren. Wie aus Fig. 12 ersichtlich, besitzen die Halter jeweils Ränder 2k die federnd an der Aussenwand der Wandung 1b anliegen.

Am Halter 2 ist ein Aufnahmeteil 2a angeformt, das eine horizontal verlaufende Oeffnung 2e sowie eine vertikal verlaufende Oeffnung 2f aufweist. In die Oeffnung 2e wird ein Verbindungsteil 10 oder ein Verbindungsteil 6 eingesetzt. In die vertikal verlaufende Oeffnung 2f wird zur Fixierung der Verbindungsteile 10 bzw. 6 von oben ein in Fig. 5 gezeigter Riegel 3 eingeschoben. Bei dem in Fig. 1 gezeigten Montagerahmen sind an jeder Seitenwandung 1a drei gleiche Halter 2 befestigt, wobei hier durchaus Ausführungen denkbar sind, bei denen ein Halter 2 an jeder Seitenwandung 1 genügt.

Das Verbindungsteil 10 ist ebenfalls weitgehend aus Kunststoff herstellbar und besitzt einen stabförmigen Schaft 10g, der wie in Fig. 2 und 3 gezeigt, in die Oeffnung 2e des Halters eingeschoben wird. Vor dem Einschieben des Verbindungsteils 10 wird ein Schaft 3b des Riegels 3 teilweise in die Oeffnung 2f des Halters 2 eingeschoben. Nachdem das Verbindungsteil 10 in die Oeffnung 2e eingeschoben worden ist, wird der Riegel 3 im Halter 2 nach unten verschoben, wobei Riffelungen 3a und 10a am Riegel 3 bzw. am Verbindungsteil 10 in gegegenseitigen Eingriff kommen. Wie ohne weiteres ersichtlich, kann dadurch das Verbindungsteil 10 praktisch stufenlos in jeder Einschubtiefe am Halter 2 lösbar fixiert werden. Entsprechend kann damit der gewünschte Abstand des Montagerahmens zur Gebäudewand 12 eingestellt und fixiert werden.

Zur Befestigung des Verbindungsteil 10 an einer im Querschnitt C-förmigen Montageschiene 4 ist am Schaft 10g ein in den Fig. 6 und 7 näher dargestelltes Halteorgan 10b angeordnet. Dieses besitzt einen Kragen 10b, der aussenseitig an der Schiene 4 anliegt. Am Kragen 10b ist ein an diesen angeformter Ansatz 10f vorgesehen, der in die Schiene 4 eingesetzt ist und in den zwei durch eine federnde Metallklammer zusammengehaltene Teile 10c untergebracht sind. Diese Teile werden zur Fixierung des Verbindungsteils 10 an der Schiene 4 mit einem keilförmigen Stück 10e in die in Fig. 7 gezeigte Spreizstellung gebracht. Dazu wird das Stück 10e durch eine Oeffnung 10h im Kragen 10b und durch den Schlitz 13 der Schiene 4 in den Ansatz 10f hineingeschoben. Die Teile 10c werden gegen die Kraft der Klammer 8 quer zur Längsrichtung der Schiene 4 versetzt und verriegeln das Verbindungsteil 10 in der Schiene 4. Das Verbindungsteil 10 kann somit ohne Werkzeuge an beliebiger Stelle der Schiene 4 fixiert werden. Durch die seitliche Abstützung der Teile 10c und des Ansatzes 10f an der Innenseite der Schiene 4 wird eine stabile Befestigung des Verbindungsteils 10 an der Schiene 4 erreicht.

Wird der Montagerahmen ohne Montageschiene 4, jedoch im Abstand zur Gebäudewand 12 an dieser befestigt, so werden die in den Fig. 8 und 9 gezeigten winkelförmigen Verbindungsteile 6 in die Halterungen 2 eingesetzt. Diese Teile 6 besitzen jeweils an einem Schaft 6c Riffelungen 6d, die den Riffelungen 10a des Verbindungsteils 10 entsprechen. Somit können auch die Verbindungsteile 6 in die Halter 2 eingeschoben und in der gewünschten Einstecktiefe mit den Riegeln 3 fixiert werden. Am Schaft 6c ist jeweils ein rechtwinklig abstehender Arm 6a mit einer Oeffnung 6b angeformt. Zur Befestigung des Verbindungsteils 6 an der Gebäudewand 12 wird ein geeigneter Stift oder Bolzen durch die Oeffnung 6b in die Gebäudewand 12 eingesetzt. Auch der Verbindungsteil 6 ist vorzugsweise aus Kunststoff hergestellt.

## Patentansprüche

1. Vorrichtung zur Befestigung eines Montagerahmens (1) für Sanitärapparate an einer Gebäudewand, wobei am Montagerahmen (1) Halter (2) befestigt sind, an denen jeweils ein an der Gebäudewand zu befestigender Verbindungsteil (10,6) fixierbar ist, und die Halter (2) eine erste Oeffnung (2e) aufweisen, in die ein Verbindungsteil (10,6) einsteckbar ist und jeweils ein Feststeller (3) zum Fixieren des Verbindungsteils (10,6) in eine zweite Oeffnung (2f) des Halters (2) mit dem Verbindungsteil (10,6) derart in Eingriff bringbar ist, dass der Verbindungsteil (10,6) in unterschiedlichen Einstecktiefen mit dem Feststeller (3) fixiebar ist, dadurch gekennzeichnet, dass die zweite Öffnung (2f) als Riegelöffnung ausgestaltet und der Feststeller ein in die Riegelöffnung einschiebbarer Schubriegel (3) ist.

2. Vorrichtung nach Anspruch 1, dadurch gekennzeichnet, dass am Halter (2) ein vom Montagerahmen (1) seitlich abstehender Aufnahmeteil (2a) angeformt ist, der die erste Oeffnung (2e) aufweist, durch die ein Schaft (10g,6c) des Verbindungsteils (10,6) einsetzbar ist.

3. Vorrichtung nach Anspruch 2, dadurch gekennzeichnet, dass der Schubriegel (3) quer zur Längsrichtung des Schaftes (10g,6c) des Verbindungsteils (10,6) einschiebbar ist.

4. Vorrichtung nach einem der Ansprüche 1 bis 3, dadurch gekennzeichnet, dass des Schubriegel (3) eine Riffelung (3a) aufweist, die in eine korrespondierende Riffelung (10a,6d) des Verbindungsteils (10,6) zur gegenseitigen Fixierung dieser Teil eingreift.

5. Vorrichtung nach einem der Ansprüche 1 bis 4, dadurch gekennzeichnet, dass jeder Halter (2) in eine Oeffnung (1b) einer Seitenwand (1a) des Montagerahmens (1) einrastend eingesetzt ist.

6. Vorrichtung nach einem der Ansprüche 1 bis 5, dadurch gekennzeichnet, dass das Verbindungsteil (6) winkelförmig ausgebildet ist und zur direkten Befestigung an der Gebäudewand (12) vorgesehen ist.

7. Vorrichtung nach einem der Ansprüche 1 bis 5, dadurch gekennzeichnet, dass das Verbindungsteil (10) ein Halteorgan (10d) aufweist, mit welchem das Verbindungsteil (10) an einer an der Gebäudewand (12) befestigte Schiene (8) fixierbar ist.

8. Vorrichtung nach Anspruch 7, dadurch gekennzeichnet, dass das Halteorgan (10d) einen Keil (10e) aufweist, der zwischen zwei Teile (10c,10d) schiebbar ist und der diese beiden Teile quer zur Längsrichtung der Schiene (8) auseinanderbewegt.

9. Vorrichtung nach Anspruch 8, dadurch gekennzeichnet, dass das Halteorgan (10d) eine Klammer (8) aufweist, welche die beiden Teile (10c,10d) federnd fixiert.

## Claims

1. Device for fastening a mounting frame (1) for hygienic apparatuses to a building wall, whereby the mounting frame (1) has attached holders (2) to which each time is fixable a connecting piece (10, 6) to be fastened to the building wall, and whereby the holders (2) comprise a first opening (2e) into which a connecting piece (10, 6) and each time a bolt (3) are insertable for fixing the connecting piece (10, 6) in a second opening (2f) of the holders (2) to be brought into engagement with the connecting piece (10, 6) in such a way that the connecting piece (10, 6) is lockable at different insert depths by means of bolt (3), characterised in that the second opening (2f) is formed as locking-bolt opening and that the bolt is a push bolt (3) which can be pushed into the locking-bolt opening.

2. Device according to Claim 1, characterised in that a receiving element (2a) projecting laterally from the mounting frame (1) is molded to the holder (2), whereby the receiving element (2a) comprises the first opening (2e) through which a shaft (10g, 6c) of the connecting piece (10, 6) can be inserted.

3. Device according to Claim 2, characterised in that the push bolt (3) can be pushed in transversely to the longitudinal direction of the shaft (10g, 6c) of the connecting piece (10, 6).

4. Device according to one of the Claims 1 to 3, characterised in that the push bolt (3) has a corrugation (3a) which engages with a corresponding corrugation (10a, 6d) on the connecting piece (10, 6) in order to mutually fix these parts in position.

5. Device according to one of the Claims 1 to 4, characterised in that each holder (2) is inserted lockingly into an opening (1b) of a side wall (1a) of the mounting frame (1).

6. Device according to one of the Claims 1 to 5, characterised in that the connecting piece (6) has an angular shape and is designed to be fastened directly to the building wall (12).

7. Device according to one of the Claims 1 to 5, characterised in that the connecting piece (10) has a retaining member (10d) with which the connecting piece (10) can be fixed to a rail (8) fastened to the building wall (12).

8. Device according to Claim 7, characterised in that the retaining member (10d) has a wedge (10e) which can be slid between two parts (10c, 10d), and which moves these two parts apart transversely to the longitudinal direction of the rail (8).

9. Device according to Claim 8, characterised in that the retaining member (10d) has a clamp (8) which elastically fixes the two parts (10c, 10d) in position.

## Revendications

1. Dispositif pour fixer un cadre de montage (1) pour appareils sanitaires à une cloison de bâtiment, des supports (2) étant fixés sur le cadre de montage (1), supports sur lesquels peut être fixée en position une pièce de liaison respective (10, 6) à fixer sur la cloison de bâtiment, et les supports (2) présentant une première ouverture (2e), dans laquelle peut être emboîtée une pièce de liaison (10, 6), tandis qu'un élément de blocage (3), destiné à fixer en position la pièce de liaison (10, 6), peut être amené, dans une seconde ouverture (2f) du support (2), en engagement avec la pièce de liaison (10, 6) de telle sorte que la pièce de liaison (10, 6) peut être fixée en position à différentes profondeurs d'emboîtement par l'élément de blocage (3), **caractérisé** en ce que la seconde ouverture (2f) est réalisée sous la forme d'une ouverture de verrou et l'élément de blocage est un verrou glissant (3), qui peut être poussé dans l'ouverture de verrou.

2. Dispositif selon la revendication 1, **caractérisé** en ce qu'une partie réceptrice (2a), partant latéralement en saillie du cadre de montage (1), est formée sur le support (2), partie qui présente la première ouverture (2e), à travers laquelle peut être introduit le corps (10g, 6c) de la pièce de liaison (10, 6).

3. Dispositif selon la revendication 2, **caractérisé** en ce que le verrou glissant (3) peut être poussé transversalement à la direction longitudinale du corps (10g, 6c) de la pièce de liaison (10, 6).

4. Dispositif selon l'une quelconque des revendications 1 à 3, **caractérisé** en ce que le verrou glissant (3) présente un striage (3a), qui s'engage dans un striage correspondant (10a, 6d) de la pièce de liaison (10, 6) afin d'obtenir une fixation réciproque de ces pièces.

5. Dispositif selon l'une quelconque des revendications 1 à 4, **caractérisé** en ce que chaque support (2) est introduit en enclenchement dans une ouverture (1b) d'une paroi latérale (1a) du cadre de montage (1).

6. Dispositif selon l'une quelconque des revendications 1 à 5, **caractérisé** en ce que la pièce de liaison (6) est coudée et prévue pour la fixation directe sur la cloison de bâtiment (12).

7. Dispositif selon l'une quelconque des revendications 1 à 5, **caractérisé** en ce que la pièce de liaison (10) présente un organe de fixation (10d), par lequel la pièce de liaison (10) peut être fixée en position dans un profilé (4) fixé sur la cloison de bâtiment (12).

8. Dispositif selon la revendication 7, **caractérisé** en ce que l'organe de fixation (10d) présente un coin (10e), qui peut être poussé entre deux pièces (10c) et les écarte transversalement à la direction longitudinale du profilé (4).

9. Dispositif selon la revendication 8, **caractérisé** en ce que l'organe de fixation (10d) présente une clavette (8), qui fixe élastiquement en position les deux pièces (10c).
